# EUROPEAN PATENT APPLICATION

(11) **EP 2 845 763 A1**
(43) Date of publication of application: **11.03.2015**
(21) Application number: 13183468.1
(22) Date of filing: 09.09.2013
(51) Int. Cl.: B60N 2/015, B60N 2/30

(54) **Seat and vehicle**

(71) Applicant: Ford Global Technologies, LLC, Dearborn, MI 48126 (US)
(72) Inventor: Erayan, Mert, 41680 Golcuk KOCAELI (TR); Özeken, Selcuk, 41680 Ihsaniye - Golcuk, Kocaeli (TR)
(74) Representative: Drömer, Hans-Carsten

(57) **Abstract**

A seat (11) and a vehicle (10) including the seat (11) are provided, wherein the seat (11) includes a cushion (15) and a foldable backrest (13). The seat (11) comprises at least one four bar linkage (17) including an upper girder (14), a lower girder (16), a front arm (18) and a rear arm (19). The four bar linkage (17) is suitable for moving the seat (11) from a usage position to a storage position.

## Description

The present invention relates to a seat for a vehicle as well as a vehicle including this seat.

Vehicle seats with a foldable backrest are known and commonly used. It is also known to provide a sliding mechanism for a seat for moving forward in a longitudinal axis of the vehicle. Such fold and slide design is not cost efficient.

It is an objective of the present invention to provide a seat for a vehicle and a vehicle with improved means for storing the seat in space saving manner.

According to the present invention, this objective is achieved by a seat as claimed in claim 1 and by a vehicle as claimed in claim 7. The depending claims contain further developments of the invention.

According to a first aspect of the present invention a seat for a vehicle is provided. The seat includes a cushion and a foldable backrest. The inventive seat comprises at least one four bar linkage including an upper girder, a lower girder, a front arm and a rear arm. The four bar linkage is suitable for moving the seat from a usage position to a storage position. By this measure, the seat can be folded and lowered for space saving in a cost effective manner. Thus, it is easier to pass the seat for getting in or getting out of the vehicle. Furthermore, the four linkage bar ensures a high stability. A higher stiffness and rigidity can be achieved.

In a further development of the inventive seat in the usage position of the seat the front arm and the rear arm are arranged at an acute angle to a vertical axis. By this measure, the seat is lifted up at the beginning of a moving process from the usage position to the storage position. Thus, the seat can be easily moved out of a locking devise.

In a further development of the inventive seat the four linkage bar is arranged at a front portion of the seat. By this measure, the vehicle floor can rise at the rear area. Thereby, in the vehicle floor additionally space is provided for example for arranging a fuel tank.

In a further development of the inventive seat the seat comprises at least one latching member for arresting the seat in a latching counterpart. By this measure, it is possible to arrest the seat in the storage position. Especially while driving the security is increased.

In a still further development of the inventive seat the seat comprises at least one latching counterpart, wherein the at least one latching counterpart is particularly arranged in the lower girder. By this measure, it is easy to remove the seat, because the latching counterpart arranged on the seat side prevents from undesired opening the four bar linkage.

According to a second aspect of the present invention a vehicle is provided. The inventive vehicle includes at least one inventive seat. The seat is particularly arranged in a rear seat row of the vehicle. Thus, the benefits of the inventive seat will benefit the vehicle.

Further features, properties and advantages of the present invention will become clear from the following description of embodiments in conjunction with the accompanying drawings.
- Figure 1: shows an inventive vehicle.
- Figure 2: shows an inventive seat in a seating position.
- Figure 3: shows the inventive seat in a folding position.
- Figure 4: shows the inventive seat in a lifting position.
- Figure 5: shows the inventive seat in a storage position.

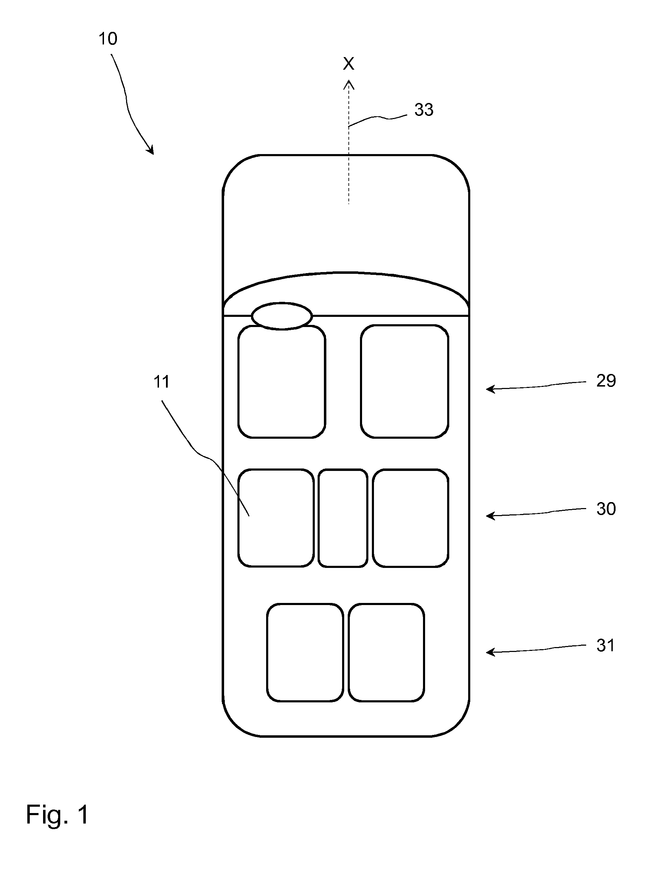

The present invention will now be described, by way of example, with reference to the accompanying drawings, in which Fig. 1 shows a vehicle 10.

The vehicle 10 in Fig. 1 is shown without a roof for illustrating a seat arrangement inside the vehicle 10. The present vehicle 10 comprises three seat rows, a front seat row 29, a first rear seat row 30 and a second rear seat row 31. In an X-direction along a longitudinal axis 33 the front seat row 29 is in front of the first rear seat row 30 and the first rear seat row 30 is in front of the second seat row 31. The X-direction is equal to a driving direction of the vehicle 10.

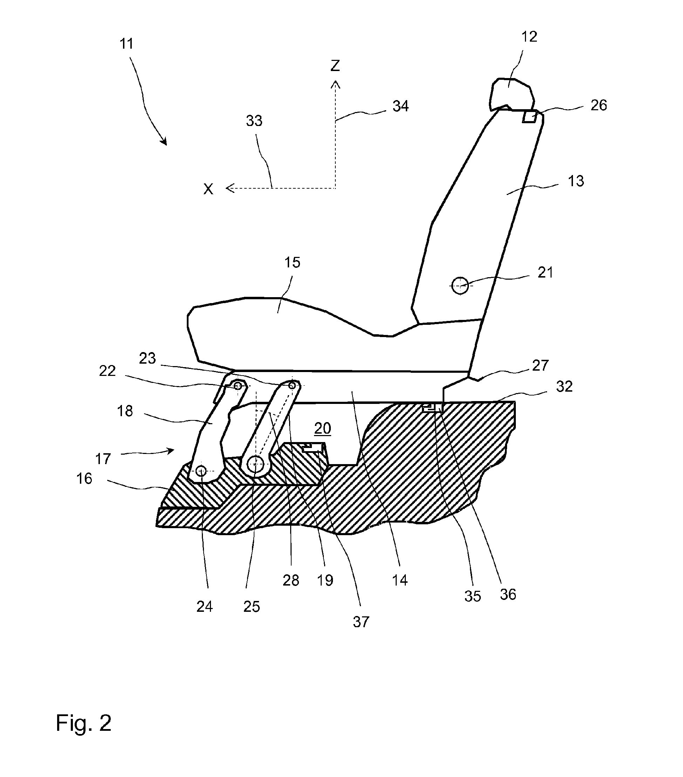

The inventive vehicle 10 comprises at least one inventive seat 11. Said seat 11 may, in particular, be arranged in one of the rear seat rows 30, 31. An exemplary embodiment of the inventive seat 11 is shown in the Figures 2 to 5 in different conditions.

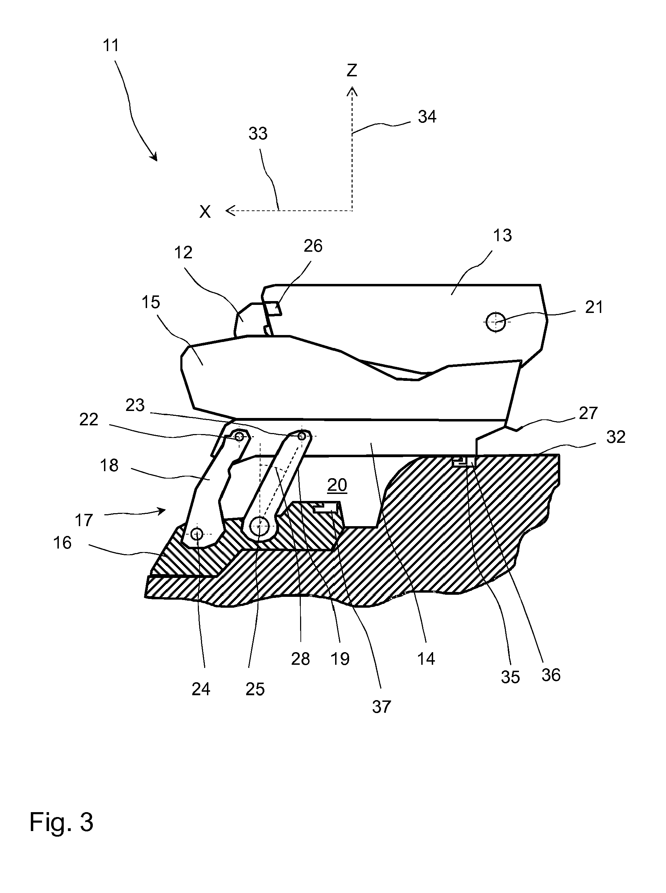

In the Figures 2 and 3 the seat 11 is shown in usage positions, wherein in Fig.2 the seat is shown in a seating position and in Fig. 3 in a folding position. In the seating position shown in Fig. 2 the seat 11 is usable for seating. In the folding position shown in Fig. 3 the seat 11 is usable as a table or as an armrest, for example.

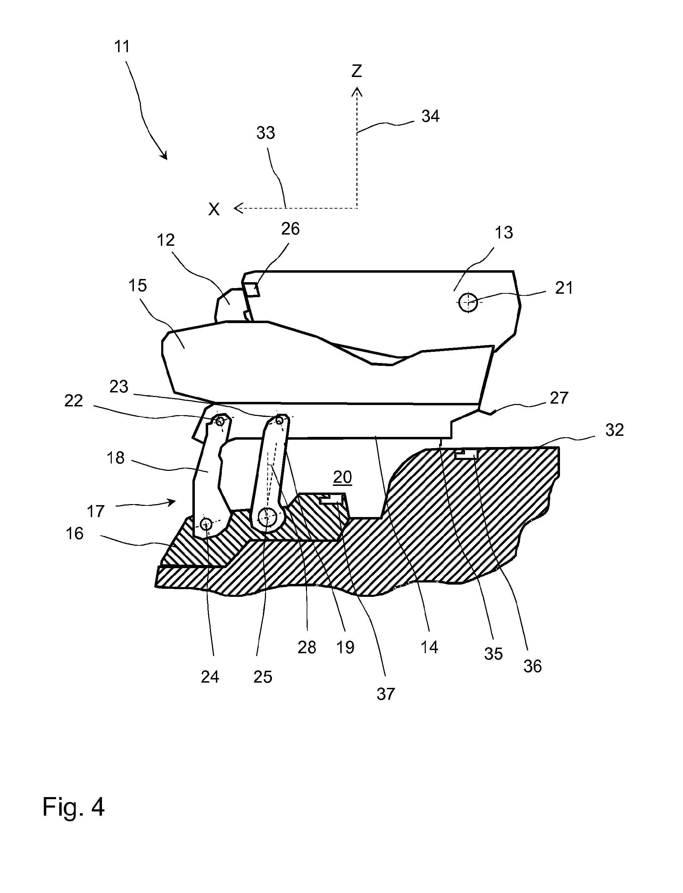

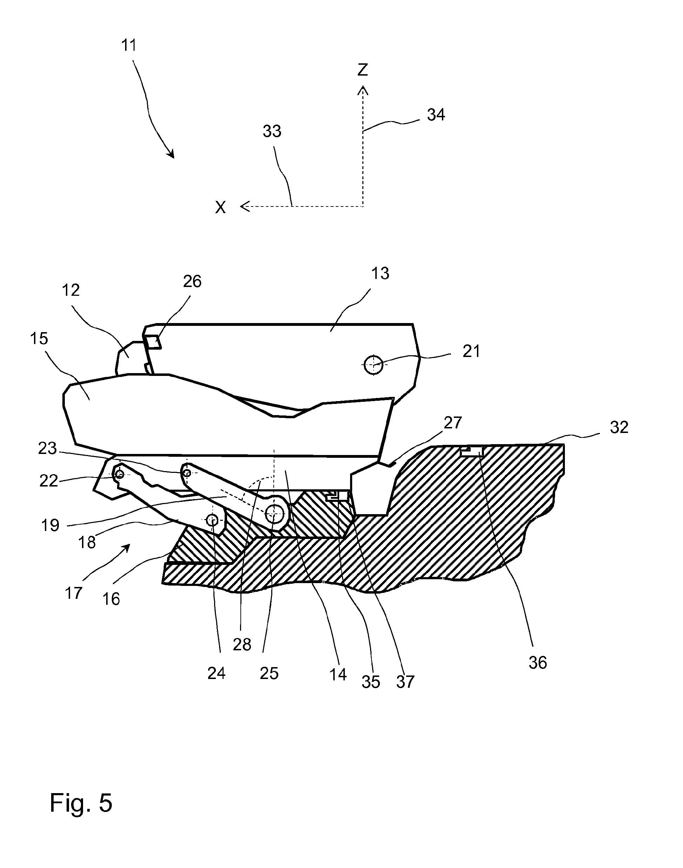

In Fig. 4 the seat 11 is shown in a lifting position. The lifting position is an interim position between one of the usage positions and a storage position, which is shown in Fig. 5. In the storage position the seat 11 is arranged in a space saving manner near a vehicle floor 32 in a storage area 20.

The inventive seat 11 comprises a cushion 15 and a backrest 13, which is foldable around a backrest pivot axis 21 from the seating position to the folding position and vice versa. The seat 11 preferably includes a headrest 12. The headrest 12 may be integrated in the backrest 13.

In the seating position shown in Fig. 2 the backrest 13 is upright. In the folding position shown in Fig. 3 the backrest 13 is folded onto the cushion 15. In the seating position and in the folding position the cushion 15 is placed at the same X-position along the longitudinal axis 33 as well as on the same Z-position along a vertical axis 34.

For initiating the folding process the backrest 13 may include a folding actuator 26. The folding actuator 26 may be formed as a strap or as a handle, for example. The folding actuator 26 may be connected to a backrest locking mechanism by a Bowden cable or by a lever mechanism, for example. The backrest locking mechanism prevents for folding the backrest 13 without actuating the folding actuator 26. By actuating the folding actuator 26 the backrest locking mechanism is unlocked. The backrest locking mechanism is not shown in detail, it equates the prior art.

The inventive seat 11 comprises at least one four bar linkage 17. The four bar linkage includes an upper girder 14, a lower girder 16, a front arm 18 and a rear arm 19. The four bar linkage 17 comprises four pivot axis 22, 23, 24, 25, wherein the upper girder 14 is pivot mounted to the front arm 18 in a front upper pivot axis 22 and to the rear arm 19 in a rear upper pivot axis 23 and wherein the lower girder 16 is pivot mounted to the front arm 18 in a front lower pivot axis 24 and to the rear arm 19 in a rear lower pivot axis 25. In particular, four bar linkages 17 may be arranged on both sides of the seat 11. The lower girder 16 of the present seat 11 is mounted to the vehicle floor 32.

In particular, the four bar linkage 17 may be arranged in a front portion of the seat 11 shown in Figures 2 to 5. Thereby, the vehicle floor can rise at the rear.

Via the four bar linkage 17 the seat 11 is movable from one of the usage positions to a storage position and vice versa, particularly from the folded position to the storage position shown in Fig. 5.

The seat 11 may comprise at least one latching member 35. In particular, latching members 35 may be arranged on both sides of the seat 11. Via the latching member 35 the seat 11 can be arrested in the usage positions shown in the Figures 2 and 3 by means of a rear latching counterpart 36. Moreover, the seat 11 can also be arrested in the storage position shown in Fig. 5 by means of the latching member 35 and a front latching counterpart 37. Like the matching member 35, latching counterparts 36, 37 may be arranged on both sides of the seat 11.

Moving the seat 11 from the usage positions to the storage position is blocked while the latching member 35 is arrested in the rear latching counterpart 36. On the other hand, moving the seat 11 from the storage positions to the usage position is blocked while the latching member 35 is arrested in the front latching counterpart 37. For initiating the moving process the seat 11 may include a movement actuator 27. The movement actuator 27 may be formed as a strap or as a handle, for example. The movement actuator 27 is connected to the at least one latching member 35 by a Bowden cable or by a lever mechanism, for example. The latching member 35 and each of the latching counterparts 36, 37 form a locking arrangement. Said locking arrangement prevents the seat 11 from being moved without actuating the movement actuator 27. By actuating the movement actuator 27 the locking arrangement is unlocked. However, it is also conceivable that the movement actuator 27 is arranged on the vehicle side for adjusting the rear latching counterpart 36 and for unlocking the locking arrangement.

The locking or unlocking of the locking arrangement may be assisted by an assisting element, which is for example a pre-loaded spring or a gas pressure spring.

In the present embodiment the rear latching counterpart 36 is arranged at the vehicle floor 32 and the front latching counterpart 37 is arranged in the lower girder 16. In particular, if the seat 11 is a removable seat 11 the front latching counterpart 37 may be arranged at the lower girder 16. However, it is also conceivable that the rear latching counterpart 36 is arranged at the seat side or that the front latching counterpart 37 is arranged at the vehicle side.

In the usage position shown in Figures 2 and 3 the cushion 15 and the backrest 13 are placed on a certain X-position along the longitudinal axis 33 and on a certain Z-position along the vertical axis 34. The front arm 18 and the rear arm 19 have an inclined orientation. The front arm 18 and the rear arm 19 are arranged in an acute angle 28 to the vertical axis 34.

At the beginning of the movement, the cushion 15 moves with the backrest 13 in Z-direction and lifts up from the vehicle floor 32, as shown in Fig. 4. At the same time, the cushion 15 and the backrest 13 move in X-direction. Thereby, the angle 28 decreases. The movement in positive Z-direction, i.e. upwards, ends when the front arm 18 and the rear arm 19 reach a vertical orientation.

In continuing the movement the angle 28 increases and the cushion 15 and the backrest 13 move in a negative Z-direction, i.e. downwards, while moving in X-direction. The seat 11 sinks into the storage area 20.

The cushion 15 moves with the backrest 13 along an arc from the usage position to the storage position and vice versa.

### List of reference numerals

- 10: Vehicle
- 11: Seat
- 12: Headrest
- 13: Backrest
- 14: Upper Girder
- 15: Cushion
- 16: Lower Girder
- 17: Four Bar Linkage
- 18: Front Arm
- 19: Rear Arm
- 20: Storage Area
- 21: Backrest Pivot Axis
- 22: Front Upper Pivot Axis
- 23: Rear Upper Pivot Axis
- 24: Front Lower Pivot Axis
- 25: Rear Lower Pivot Axis
- 26: Folding Actuator
- 27: Movement Actuator
- 28: Angle
- 29: Front Seat Row
- 30: First Rear Seat Row
- 31: Second Rear Seat Row
- 32: Vehicle Floor
- 33: Longitudinal Axis
- 34: Vertical Axis
- 35: Latching Member
- 36: Rear Latching Counterpart
- 37: Front Latching Counterpart

## Claims

1. A seat (11) for a vehicle (10), wherein the seat (11) includes a cushion (15) and a foldable backrest (13), **characterised in that** the seat (11) comprises at least one four bar linkage (17) including an upper girder (14), a lower girder (16), a front arm (18) and a rear arm (19) for moving the seat (11) from a usage position to a storage position.

2. The seat (11) as claimed in claim 1, wherein in the usage position of the seat (11) the front arm (18) and the rear arm (19) are arranged at an acute angle (28) to a vertical axis (34).

3. The seat (11) as claimed in claim 1 or 2, wherein the four linkage bar (17) is arranged at a front portion of the seat (11).

4. The seat (11) as claimed in one of the claims 1 to 3, wherein the seat (11) comprises at least one latching member (35) for arresting the seat (11) in a latching counterpart (36, 37).

5. The seat (11) as claimed in claim 4, wherein the seat (11) comprises at least one latching counterpart (36, 37).

6. The seat (11) as claimed in claim 5, wherein the at least one latching counterpart (36, 37) is arranged in the lower girder (16).

7. A vehicle (10) including at least one seat (11) as claimed in any one of the preceding claims.

8. The vehicle (10) as claimed in claim 7, wherein the at least one seat (11) is arranged in a rear row (30, 31).
